# EUROPÄISCHE PATENTSCHRIFT

(11) **EP 3 388 485 B1**
(45) Veröffentlichungstag und Bekanntmachung des Hinweises auf die Patenterteilung: **16.06.2021**
(21) Anmeldenummer: 18155035.1
(22) Anmeldetag: 05.02.2018
(51) Int. Cl.: C08L 23/28, C08K 5/33, C08K 3/04

(54) **KAUTSCHUKMISCHUNG UND ELASTOMERER ARTIKEL MIT VERBESSERTER HAFTUNG**
RUBBER COMPOSITION AND ELASTOMERIC ARTICLE WITH IMPROVED ADHESION
MÉLANGE DE CAOUTCHOUC ET ARTICLE ÉLASTOMÈRE À ADHÉRENCE AMÉLIORÉE

(30) Priorität: 10.04.2017 DE 102017206086
(43) Veröffentlichungstag der Anmeldung: 17.10.2018
(73) Patentinhaber: ContiTech AG, 30165 Hannover (DE)
(72) Erfinder: Sostmann, Stefan, 30855 Langenhagen (DE)
(74) Vertreter: Continental Corporation

(56) Entgegenhaltungen:
- WO-A1-2014/040644
- DE-A1-102009 028 607
- DE-B- 1 091 320
- US-A- 3 250 733
- US-A1- 2006 014 867
- DATABASE WPI Week 200864 Thomson Scientific, London, GB; AN 2008-K78116 XP002783520, & JP 2008 195040 A (TOKAI RUBBER IND LTD) 28. August 2008 (2008-08-28)

## Beschreibung

Die Erfindung betrifft eine Kautschukmischung, die eine gute Haftung zu einer textilen Festigkeitsträgerlage aufweist, und einen elastomeren Artikel, der die Kautschukmischung und wenigstens eine bevorzugt eingebettete textile Festigkeitsträgerlage enthält.

Elastomere Artikel mit eingebetteter textiler Festigkeitsträgereinlage sind insbesondere Schutzanzüge, Drucktücher, Faltenbälge, Schläuche, Antriebsriemen, Transportbänder, Fördergurte, Luftfederbälge, Gummi-Feder-Elemente, Reifen und dergleichen. Diese Artikel weisen in der Regel wenigstens eine textile Festigkeitsträgerschicht in Form einer Gewebeschicht auf, die in Gummi eingebettet ist.

Zur Herstellung dieser elastomeren Artikel werden Kautschukmischungen verwendet, die wenigstens einen Kautschuktyp enthalten. Je nach physikalischer Anforderung, die an den elastomeren Artikel gestellt werden, handelt es sich hierbei um sehr unterschiedliche Kautschuktypen. Für die Herstellung dynamisch beanspruchter Artikel mit hohem Temperatureintrag während des Einsatzes wird häufig Chlorsulfoniertes Polyethylen (CSM) und / oder alkyliertes chlorsulfoniertes Polyethylen (ACSM) verwendet. Diese Kautschuktypen zeichnen sich durch eine besonders gute Ozon-, Witterungs- und Alterungsbeständigkeit aus, bei zugleich sehr guter Ermüdungsrissbeständigkeit. Nachteilig ist es aber, dass sowohl CSM als auch ACSM keine gute Haftverbindung zu textilen Festigkeitsträgereinlage ausbilden. Dies lässt sich durch Maßnahmen, wie sie bspw. bei vielen klassischen Dienkautschuken wie NR, BR, SBR, EPDM o.ä. gut funktionieren, nicht signifikant verbessern. Eine dieser bekannten Maßnahmen ist beispielsweise der Einsatz von RFL-Dipsystemen auf den textilen Festigkeitsträger, siehe u.a. US 5,807,634.

Bei dynamisch hoch belasteten Artikeln, die eine Kautschukmischung auf Basis CSM und / oder ACSM enthalten, ist dies ein großer Nachteil.

Aufgabe der Erfindung ist es nun, eine Kautschukmischung bereitzustellen, die CSM und / oder ACSM als wesentliche Kautschukkomponente enthält und die sich durch eine verbesserte statische und dynamische Haftfestigkeit zwischen der Kautschukmischung und einer textilen Festigkeitsträgerlage auszeichnet. Gleichzeitig sollen die weiteren physikalischen Eigenschaften der Kautschukmischung auf gleichem Niveau verbleiben.

Die Aufgabe wird dadurch gelöst, dass die Kautschukmischung 80 bis 100 phr ASCM und / oder CSM und 0,2 bis 2 phr wenigstens eines Chinondioxims als Haftmittel enthält.

Überraschenderweise hat sich gezeigt, dass der Einsatz von relativ geringen Mengen an Chinondioxim als Haftmittel in Kautschukmischungen basierend auf ASCM und / oder CSM eine deutlich verbesserte Haftung zu textilen Festigkeitsträgereinlagen ermöglicht.

Chinondioxim ist bisher lediglich als Vernetzungsmittel für Butylkautschuke und andere Dienkautschuke bekannt, wobei hier in Kombination mit speziellen Oxidationsmitteln, meist Bleioxide, größere Mengen an Chinondioxim benötigt werden. Die Vernetzungsreaktion ist hierbei gekoppelt an die Doppelbindungen des Kautschuks, weswegen Chinondioxim für eine Vernetzung von CSM / ACSM aufgrund der dort fehlenden Doppelbindungen nicht in Frage kommt.

In JP 2008 195040 A wird zum Beispiel ein Schlauch beschrieben, der eine Innenschicht besitzt, welche iodhaltigen Fluorkautschuk, ein peroxidisches Vernetzungssystem, Triallylisocyanat und p-Chinondioxin enthält.

Erfindungsgemäß können alle der fachkundigen Person bekannten Chinondioxime alleine oder in Kombination verwendet werden. Hierzu zählen neben p-Chinondioxim noch p-Chinondioxim-dibenzoat und andere Verbindungen des Chinondioxims. Bevorzugt ist die Verwendung von p-Chinondioxim.

Die Kautschukmischung enthält erfindungsgemäß 0,2 bis 2 phr, bevorzugt 0,5 bis 1,5 phr, besonders bevorzugt 0,9 bis 1,1 phr wenigstens eines Chinondioxims. Höhere Mengen an Chonondioxim führen zu einer Verschlechterung der physikalischen Eigenschaften, während niedrigere Mengen nicht den gewünschten Haftungseffekt erzielen.

Werden zwei oder mehr verschiedene Chinondioxime eingesetzt, so beziehen sich die angegebenen Mengen auf die Gesamtmenge aller eingesetzter Chinondioxime.

Erfindungsgemäß enthält die Kautschukmischung 80 bis 100 phr, bevorzugt 90 bis 100 phr, besonders bevorzugt 100 phr CSM und / oder ACSM. Die Kautschukmischung kann somit nur CSM, nur ACSM oder eine Kombination aus CSM und ACSM enthalten.

Die Kautschukmischung kann 0 bis 20 phr, bevorzugt 0 bis 10 phr, besonders bevorzugt 0 phr wenigstens eines weiteren Kautschuks enthalten. Dieser weitere Kautschuk ist ausgewählt aus der Gruppe, bestehend aus Ethylen-Propylen-Mischpolymerisat (EPM) und / oder Ethylen-Propylen-Dien-Mischpolymerisat (EPDM) und / oder Nitrilkautschuk (NBR) und / oder (teil)hydrierter Nitrilkautschuk (HNBR) und / oder Fluor-Kautschuk (FKM) und / oder Chloropren-Kautschuk (CR) und / oder Naturkautschuk (NR) und / oder Styrol-Butadien-Kautschuk (SBR) und / oder Isopren-Kautschuk (IR) und / oder Butylkautschuk (IIR) und / oder Brombutylkautschuk (BIIR) und / oder Chlorbutylkautschuk (CIIR) und / oder Butadien-Kautschuk (BR) und / oder Chloriertes Polyethylen (CM) und / oder Polyepichlorhydrin (ECO) und / oder Ethylen-Vinylacetat-Kautschuk (EVA) und / oder Acrylat-Kautschuk (ACM) und / oder Ethylen-Acrylat-Kautschuk (AEM) und / oder Silikonkautschuk (MQ, VMQ, PVMQ, FVMQ) und / oder fluorierter Methylsilikonkautschuk (MFQ) und / oder perfluorinierter Propylen-Kautschuk (FFPM) und/ oder Perfluorcarbon-Kautschuk (FFKM) und / oder Poyurethan (PU). Die genannten Kautschuke können hierbei alleine oder im Verschnitt eingesetzt werden.

Des Weiteren enthält die Kautschukmischung übliche Mischungsingredienzien, wie z. Bsp. wenigstens einen Vernetzer oder ein Vernetzersystem (Vernetzungsmittel und Beschleuniger).

Besonders gute Ergebnisse lassen sich erzielen, wenn elementarer Schwefel als Vernetzungsmittel vorhanden ist, d.h. wenn die Kautschukmischung schwefelvernetzt wird.

Des Weiteren zeigen sich besonders gute Haftungseigenschaften, wenn die Kautschukmischung wenigstens noch einen di- oder polysulfidischen Vulkanisationsbeschleuniger enthält. Als besonders gut haben sich hierbei Vulkanisationsbeschleuniger aus der Gruppe der Thiazole, insbesondere Dibenzylthiazyldisulfid (MBTS), aus der Gruppe der Thiuramdisulfide, insbesondere Tetramethylthiuramdisulfid, (TMTD) oder aus der Gruppe der Dithiocarbamate, insbesondere Zink-dimethyldithiocarbamat (ZDMC), gezeigt.

Der Einsatz von Chinondioxim führt in einer bevorzugten Ausführungsform dazu, dass die Kautschukmischung frei von Oxidationsmitteln, insbesondere frei von FeCl₃, H₂O₂, Pb₃O₄, NaOCl/NaOH und Peroxiden, ist, d.h. dass die Gesamtmenge an Oxidationsmitteln 0 phr beträgt.

Weitere Mischungsingredienzien sind zumeist noch ein Füllstoff, wie bspw. Ruß und / oder Kieselsäure, und/oder ein Verarbeitungshilfsmittel und/oder ein Weichmacher und/oder ein Alterungsschutzmittel sowie gegebenenfalls weitere Zusatzstoff (z.B. Farbpigmente). Diesbezüglich wird auf den allgemeinen Stand der Kautschukmischungstechnologie verwiesen.

Eine weitere Aufgabe der Erfindung ist es, einen elastomeren Artikel bereitzustellen, der wenigstens eine eingebettete textile Festigkeitsträgerlage und wenigstens eine Schicht auf Basis einer Kautschukmischung mit CSM und / oder ACSM als wesentlicher Kautschukkomponente enthält und wobei sich diese Kautschukmischung in direktem Kontakt zu der Festigkeitsträgerschicht befindet und bei dem die Haftung zwischen der textilen Festigkeitsträgerschicht und der genannten Kautschukmischungsschicht bei möglichst gleichbleibenden weiteren physikalischen Eigenschaften optimiert wird.

Diese Aufgabe wird dadurch gelöst, dass der elastomere Artikel wenigstens eine eingebettete textile Festigkeitsträgerlage und wenigstens eine Schicht auf Basis einer Kautschukmischung enthält, wobei die Kautschukmischung 80 bis 100 phr ASCM und / oder CSM und 0,2 bis 2 phr wenigstens eines Chinondioxims als Haftmittel enthält und wobei sich die eingebettete textile Festigkeitsträgerlage und die Schicht auf Basis einer Kautschukmischung in direktem Kontakt zueinander befinden.

Der elastomere Artikel enthält erfindungsgemäß wenigstens einen textilen Festigkeitsträger. Dieser textile Festigkeitsträger liegt zumeist als einlagige oder mehrlagige textile Festigkeitsträgerschicht vor und kann je nach Endprodukt als Filz, Vlies, Gewebe, Geflecht, Gewirk oder Gestrick, Gelege ausgebildet sein. Es ist auch möglich, dass die textile Festigkeitsträgerschicht aus Komponenten aus Filz, Vlies, Gewebe, Geflecht, Gewirk oder Gestrick, Gelege ausgebildet ist.

In einer bevorzugten Ausführungsform kann die textile Festigkeitsträgerschicht auch in Cordkonstruktion ausgebildet sein.

Als Materialien für die textile Festigkeitsträgerschicht können alle der fachkundigen bekannten und geeigneten textilen Materialien verwendet werden, die bevorzugt ausgewählt sind aus der Gruppe, bestehend aus: Polyamid (PA), z.B. PA6, PA6.6, PA11, PA12, PA6.10, PA6.12, und / oder Copolyamide und / oder Polyester (PES) und / oder Rayon und / oder Polyethylenterephthalat (PET) und / oder Polyethylennaphthalat (PEN) und / oder Polybutylenterephthalat (PBT) und / oder Polycarbonat (PC) und / oder ungesättigtes Polyesterharz (UP) und / oder Poly(1,4-cyclohexandimethylenterephthalat) (PCDT) und / oder Baumwolle und / oder Zellwolle und / oder Polyvinylalkohol (PVAL) und / oder Polyoxibenzonaphtoat und / oder Polyvinylacetal (PVA) und / oder Polyketon (POK) und / oder Polyetheretherketon (PEEK) und / oder Polyethylen-2,6-naphthalat (PEN) und / oder Polyphenylen und / oder Polyphenylenoxid (PPO) und / oder Polyphenylensulfid (PPS) und / oder Polphenylenether und / oder Polybenzoxazol (PBO) und / oder Polyoxadiazol (POD) und / oder Polyetherimid (PEI) und / oder m-Aramid und / oder p-Aramid und / oder Wolle und / oder Baumwolle und / oder Polypropylen und / oder Melamin und / oder modifizierte Viskose und / oder hochkristalline Polymerfasern und / oder Fluorpolymere, wie bspw. Fluorsilikon, Polytetrafluorethylen (PTFE) und Perfluorethylenpropylen (FEP), und /oder Fluor-Copolymere, wie bspw. Poly(vinylidenfluorid-co-hexafluorpropylen) (VDF/HFP), Poly(vinylidenfluorid-co-hexafluorpropylen-co-tetrafluorethylen) (TFB), Poly(vinylidenfluorid-co-tetrafluorethylen-co-perfluormethylvinylether) (VDF/TFE/PMVE), Poly(tetrafluorethylen-co-propylen) (TFE/P) und Poly(vinylidenfluorid-co-chlortrifluorethylen) (VDF/CTFE).

Die Materialien für die textile Festigkeitsträgerschicht können hierbei alleine oder in Kombination verwendet werden, d.h. es sind auch so genannte Hybridsysteme möglich.

Hinsichtlich der qualitativen und quantitativen Zusammensetzung der Kautschukmischung gelten die bereits weiter oben getroffenen Ausführungen.

Die Erfindung soll nun anhand von Vergleichs- und Ausführungsbeispielen, die in den Tabellen 1a, 1b und 1c zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt. Im oberen Teil der Tabellen ist dabei die Mischungszusammensetzung dargestellt, während im unteren Teil die dazugehörigen entsprechenden physikalischen Eigenschaften illustriert sind.

Der sogenannte T-Test gemäß ASTM D2229 ist hierbei ein Haftungstest zwischen textiler Festigkeitsträgereinlage und Kautschukmischung. Er wird gegenüber einem Polyestergarn mit der Konstruktion mit 1220dtex x 1 x 2 mit RFL-Ausrüstung und mit 10mm Einbettungslänge durchgeführt. Beim T-Test wird die statische Haftung ermittelt. Hierbei werden die zu prüfenden Fäden in eine Gummimatrix eingelegt, welche anschließend unter Druck- und Temperatureinfluss vulkanisiert wird. Die in einem Winkel von 90° zum Herausziehen des Fadens aus dem Gummi benötigte Kraft wird gemessen und üblicherweise in Newton angeben, wobei die Breite des Vulkanisationsblocks je nach Fadenstärke 5 bzw. 10 mm beträgt.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

**Tabelle 1a**

| | **V1** | **E1** | **E2** | **V2** |
|---|---|---|---|---|
| ACSM | 100 | 100 | 100 | 100 |
| Ruß, N550 | 25 | 25 | 25 | 25 |
| Magnesiumoxid | 4 | 4 | 4 | 4 |
| Sebacinsäure- Weichmacher | 10 | 10 | 10 | 10 |
| Alterungsschutzmittel, 6PPD | 5 | 5 | 5 | 5 |
| Pentaerythritolverb. | 3 | 3 | 3 | 3 |
| Schwefel | 1 | 1 | 1 | 1 |
| Beschleuniger, MBTS | 1,5 | 1,5 | **2,5** | **2,5** |
| Stearinsäure | 2 | 2 | 2 | 2 |
| Chinondioxim (ODO) | -- | **1** | **1** | **3** |
| | | | | |
| Härte [ShA] DIN 53505 | 59 | 60 | 60 | 57 |
| Reißfestigkeit [MPa] DIN 53504, S2-Stäbe | 23,8 | 23,6 | 23,4 | 21,2 |
| Modul 100 % [MPa] DIN53504, S2-Stäbe | 1,9 | 2,0 | 2,0 | 1,5 |
| Rückprallelast. [%] DIN53512 | 53 | 53 | 53 | 43 |
| T-Test [N] | 82,7 | 102,8 | 118,4 | 84,1 |

**Tabelle 1b**

| | **V3** | **V4** | **V5** |
|---|---|---|---|
| Naturkautschuk | 40 | 40 | 40 |
| Butadienkautschuk | 60 | 60 | 60 |
| Ruß, N550 | 60 | 60 | 60 |
| Zinkoxid | 5 | 5 | 5 |
| Stearinsäure | 2 | 2 | 2 |
| Schwefel | 3 | 3 | 3 |
| Beschleuniger, CBS | 0,8 | 0,8 | 0,8 |
| Alterungsschutzmi ttel, 6PPD | 5 | 5 | 5 |
| Resorcin | 2 | 2 | 2 |
| Formaldehydspender | 3 | 3 | 3 |
| Chinondioxim (QDO) | -- | 1 | 1 |
| Oxidationsmittel, MBTS | -- | -- | 1 |
| | | | |
| Härte [ShA] DIN 53505 | 66 | 67 | 68 |
| Reißfestigkeit [MPa] DIN 53504, S2-Stäbe | 20,9 | 20,8 | 20,8 |
| Modul 100 % [MPa] DIN53504, S2-Stäbe | 2,4 | 2,3 | 2,4 |
| Rückprallelast. [%] DIN53512 | 54 | 52 | 51 |
| T-Test [N] | 102,9 | 101,4 | 100,2 |

**Tabelle 1c**

| | **V6** | **V7** | **V8** |
|---|---|---|---|
| Chloroprenkautschuk, S-modifiziert, Baypren 611 NA | 100 | 100 | 100 |
| Ruß, N774 | 45 | 45 | 45 |
| Magnesiumoxid | 4 | 4 | 4 |
| Zinkoxid | 5 | 5 | 5 |
| Stearinsäure | 2,5 | 2,5 | 2,5 |
| Beschleuniger, MBTS | 1,5 | 1,5 | 2,5 |
| Alterungsschutzmi ttel, 6PPD | 3,5 | 3,5 | 3,5 |
| Weichmacher, DOP | 8 | 8 | 8 |
| Chinondioxim (QDO) | -- | 1 | 1 |
| | | | |
| Härte [ShA] DIN 53505 | 60 | 61 | 61 |
| Reißfestigkeit [MPa] DIN 53504, S2-Stäbe | 20,8 | 20,5 | 21 |
| Modul 100 % [MPa] DIN53504, S2-Stäbe | 1,8 | 1,9 | 1,8 |
| Rückprallelast. [%] DIN53512 | 34 | 32 | 33 |
| T-Test [N] | 90,8 | 93,4 | 92,5 |

Die Erfindung betrifft eine Kautschukmischung, die eine gute Haftung zu einer textilen Festigkeitsträgerlage aufweist, und einen elastomeren Artikel, der die Kautschukmischung und eine bevorzugt eingebettete textile Festigkeitsträgerlage enthält.

Die Kautschukmischung enthält hierbei 80 bis 100 phr ACSM und / oder CSM und 0,2 bis 2 phr wenigstens eines Chinondioxims als Haftmittel.

## Patentansprüche

1. Kautschukmischung, **dadurch gekennzeichnet, dass** sie 80 bis 100 phr alkyliertes chlorsulfoniertes Polyethylen (ACSM) und / oder Chlorsulfoniertes Polyethylen (CSM) und 0,2 bis 2 phr wenigstens eines Chinondioxims als Haftmittel enthält.

2. Kautschukmischung nach Anspruch 1, **dadurch gekennzeichnet, dass** sie 0,5 bis 1,5 phr wenigstens eines Chinondioxims als Haftmittel enthält.

3. Kautschukmischung nach Anspruch 1 oder 2, **dadurch gekennzeichnet, dass** sie elementaren Schwefel als Vernetzungsmittel enthält.

4. Kautschukmischung nach einem der Ansprüche 1 bis 3, **dadurch gekennzeichnet, dass** sie MBTS als Vulkanisationsbeschleuniger enthält.

5. Kautschukmischung nach einem der Ansprüche 1 bis 4, **dadurch gekennzeichnet, dass** sie frei von Oxidationsmitteln ist.

6. Elastomerer Artikel, **dadurch gekennzeichnet, dass** er wenigstens eine Kautschukmischung nach einem der Ansprüche 1 bis 5 und wenigstens eine eingebettete Festigkeitsträgerschicht enthält, wobei sich die Kautschukmischung und die Festigkeitsträgerschicht in direktem Kontakt zueinander befinden.

7. Elastomerer Artikel nach Anspruch 6, **dadurch gekennzeichnet, dass** der elastomere Artikel ein Schutzanzug, ein Drucktuch, ein Faltenbalg, eine Luftfeder, ein Gummi-Feder-Element, ein Antriebsriemen, ein Transportband, ein Fördergurt, ein Schlauch oder ein Reifen ist.

## Claims

1. Rubber mixture, **characterized in that** it contains 80 to 100 phr of alkylated chlorosulfonated polyethylene (ACSM) and/or chlorosulfonated polyethylene (CSM) and 0.2 to 2 phr of at least one quinone dioxime as an adhesive.

2. Rubber mixture according to Claim 1, **characterized in that** it contains 0.5 to 1.5 phr of at least one quinone dioxime as an adhesive.

3. Rubber mixture according to Claim 1 or 2, **characterized in that** it contains elemental sulfur as a crosslinking agent.

4. Rubber mixture according to any of Claims 1 to 3, **characterized in that** it contains MBTS as a vulcanization accelerator.

5. Rubber mixture according to any of Claims 1 to 4, **characterized in that** it is free from oxidants.

6. Elastomeric article, **characterized in that** it contains at least one rubber mixture according to any of Claims 1 to 5 and at least one embedded strength member layer, wherein the rubber mixture and the strength member layer are in direct contact with one another.

7. Elastomeric article according to Claim 6, **characterized in that** the elastomeric article is a protective suit, a printing blanket, a boot/gaiter, an air spring, a rubber suspension element, a drive belt, a transport belt, a conveyor belt, a hose or a tyre.

## Revendications

1. Mélange de caoutchouc, **caractérisé en ce qu'**il contient 80 à 100 phr de polyéthylène chlorosulfoné alkylé (ACSM) et/ou de polyéthylène chlorosulfoné (CSM) et 0,2 à 2 phr d'au moins un dioxime de quinone en tant qu'adhésif.

2. Mélange de caoutchouc selon la revendication 1, **caractérisé en ce qu'**il contient 0,5 à 1,5 phr d'au moins un dioxime de quinone en tant qu'adhésif.

3. Mélange de caoutchouc selon la revendication 1 ou 2, **caractérisé en ce qu'**il contient du soufre élémentaire en tant qu'agent de réticulation.

4. Mélange de caoutchouc selon l'une quelconque des revendications 1 à 3, **caractérisé en ce qu'**il contient du MBTS en tant qu'accélérateur de vulcanisation.

5. Mélange de caoutchouc selon l'une quelconque des revendications 1 à 4, **caractérisé en ce qu'**il est exempt d'agents d'oxydation.

6. Article élastomérique, **caractérisé en ce qu'**il contient au moins un mélange de caoutchouc selon l'une quelconque des revendications 1 à 5 et au moins une couche de renforcement incorporée, le mélange de caoutchouc et la couche de renforcement se trouvant en contact direct l'un avec l'autre.

7. Article élastomérique selon la revendication 6, **caractérisé en ce que** l'article élastomérique est une combinaison de protection, un blanchet d'impression, un soufflet, un ressort pneumatique, un élément de gomme-ressort, une courroie d'entraînement, une bande de transport, une courroie de transport, un tuyau ou un pneu.
